# EUROPEAN PATENT SPECIFICATION

(11) **EP 2 189 394 B1**
(45) Date of publication and mention of the grant of the patent: **25.01.2012**
(21) Application number: 09176431.6
(22) Date of filing: 19.11.2009
(51) Int. Cl.: B65D 85/48, B65G 49/06

(54) **Swap body for the transport of glass panels**
Wechselaufbau für den Transport von Glasscheiben
Caisse mobile pour le transport de panneaux en verre

(30) Priority: 19.11.2008 IT TO20080856
(43) Date of publication of application: 26.05.2010
(73) Proprietor: Lannutti S.p.A., 12100 Cuneo (IT)
(72) Inventor: Lannutti, Valter, I-12100, CUNEO (IT); Scimia, Armando, F-59990, SEBOURG (FR); Viale, Sergio, I-12011, BORGO SAN DALMAZZO (Cuneo) (IT)
(74) Representative: Rondano, Davide

(56) References cited:
- WO-A-2008/068995
- DE-U1- 8 219 328
- FR-A- 2 637 268

## Description

The present invention relates to a swap body for the transport of glass panels, as specified in the preamble to appended independent Claim 1.

WO 2008/068995 discloses a pallet stand for the transport of DLF panels, in which the pallet is modified to lower the support base in order to maximise the vertical inclination of the panels so that they fit into a standard swap body.

At the moment, glass is produced (mostly by the so-called "floating" system, hence the name "float glass") in the form of panels which are classified basically into two types: PLF panels having a length of 6000 mm and a height of 3210 mm, and DLF panels having a length of 3210 mm and a height which is variable from less than 2400 mm to 2600 mm.

At the moment a little more than half of the glass produced in Europe is constituted by PLF glass panels, more than one third by DLF glass panels in 2400 mm, 2550 mm and 2600 mm formats, and about 10% by glass panels with heights of less than 2400 mm. Given their dimensions, PLF glass panels are transported on special trailers specifically intended for such goods. DLF glass panels, on the other hand, are transported on conventional trailers, once they are packaged in suitable wooden boxes and positioned on suitable A-shaped stands resting on the trailer floor, which trailers are therefore also usable for the transport of other goods. Considering that the vertical space taken up by the wooden box and the stand is about 300 mm, the overall height of the assembly constituted by the glass panels with the respective boxes and by the stand may therefore reach about 2900 mm for the panel format with a height of 2600 mm. This height is not currently compatible with the maximum height allowed for railway transport between Italy and Belgium, where most of the glass production in Europe is concentrated, for the reasons described below. The largest swap body which can currently be transported on railway wagons on the railway line which connects the two intermodal hubs of Orbassano in Italy and Chatelet in Belgium, passing through the Simplon Tunnel, is the C59 swap body which has a useful height (internal height) of 2760 mm. Owing to the additional vertical space of about 300 mm due to the wooden box and to the stand, the C59 swap body can therefore transport solely DLF glass panels of heights less than or equal to 2400 mm. DLF glass panels in formats of 2550 mm and 2600 mm height, which are the two most widespread formats, cannot therefore be transported by rail. These two formats, as well as any formats of greater height which might come into general use in the future, can therefore be transported between the two above-mentioned intermodal hubs solely by road, unless alternative railway lines are used, for example, via the Brenner Pass, which however involves a considerable increase in distances and hence in travel times, thus rendering rail transport less advantageous than road transport.

It is therefore an object of the present invention to provide a swap body which enables DLF glass panels of heights greater than 2400 to be transported even on railway wagons that travel on lines on which the largest swap body that can be used is the C59 swap body.

This and other objects are achieved in full according to the present invention by virtue of a swap body having the characteristics specified in the characterizing part of appended independent Claim 1.

Advantageous embodiments of the present invention are the subjects of the dependent claims, the content of which is to be intended as integral part of the present description.

Briefly, the invention is based on the idea of providing, in the floor of the swap body, a series of pockets or recesses in which to house the bases of the stands on which the wooden boxes that are used for the packaging of the DLF glass panels are intended to be placed. The pockets have a minimum depth of 90 mm, preferably 140 mm, so that the bases of the stands, which as stated above, have a height of about 150 mm, project from the pockets no more than 60 mm, preferably no more than 10 mm. The fact that the bases of the stands can be housed in the pockets reduces the height of the assembly constituted by the stand and the wooden box by at least 90 mm, preferably by 140 mm, thus enabling 2550 mm glass panels and, with 140 mm depth pockets, even 2600 mm glass panels, to be transported in swap bodies having a maximum internal height of 2760 mm, such as the above-mentioned C59 swap bodies.

The solution proposed is very easy to implement since it suffices to provide the pockets in the floor of the swap body, utilizing the thickness thereof. Moreover, the solution proposed does not adversely affect the transport capacity of the swap body since the pockets can be closed if necessary by covering elements in order to re-establish the flat load platform of a normal swap body. Another advantage offered by the proposed solution is a better stabilization of the load by virtue of the fact that the bases of the stands are locked inside the pockets, in comparison with the current solution of simply resting the stands on the floors of the swap bodies with the risk of the stands sliding on the load platform, for example as a result of sharp braking or acceleration. The capability to transport the glass panels by rail also allows to increase the transportable load, since the maximum load that can be transported in a swap body is greater for rail transport than for road transport.

Further characteristics and advantages of the invention will become clear from the following detailed description which is given purely by way of non-limiting example with reference to the appended drawings, in which:
Figure 1 shows the exterior of a C59 swap body adapted in accordance with the invention for the rail transport of DLF glass panels in formats with heights of more than 2400 mm,
Figure 2 shows a detail of the floor of the swap body of Figure 1 in the empty condition,
Figure 3 shows the interior of the swap body of Figure 1 with the bases of the stands for supporting the panel-carrying wooden boxes inserted into suitable pockets provided in the floor of the swap body, and
Figure 4 shows a detail of the base of a stand carrying a plurality of wooden boxes containing DLF glass panels to be transported.

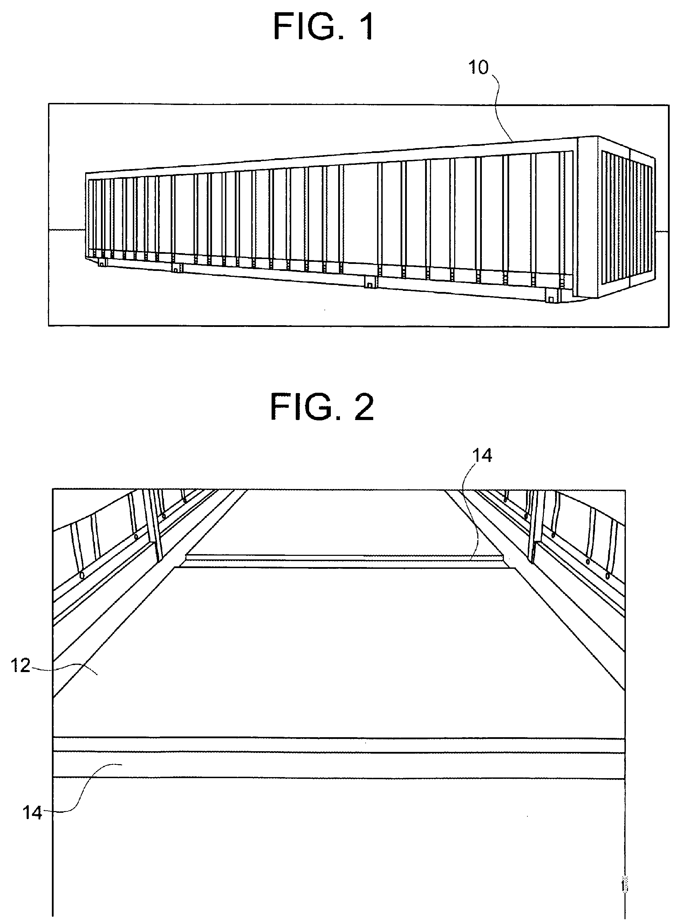

With reference first to Figure 1, a C59 swap body, generally indicated 10, is adapted in accordance with the invention for the rail transport of DLF glass panels in formats with heights greater than 2400 mm, in particular in formats with heights of 2550 mm and 2600 mm. The swap body 10 can equally well be transported either on road semi-trailers or on railway wagons, thus permitting intermodal management of the transport of the DLF glass panels in the above-indicated formats. The external structure of the swap body according to the invention is substantially identical to that of a conventional swap body since the adaptations proposed herein to permit the rail transport of DLF glass panels in the above-indicated formats affect the interior of the swap body and, in particular, the floor or base thereof.

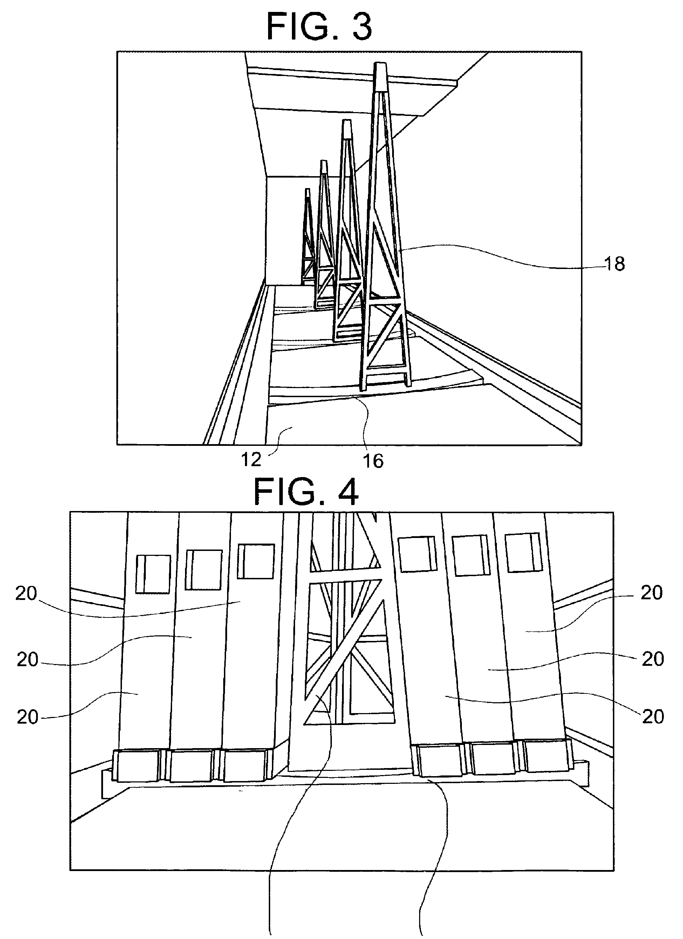

More specifically, as shown in Figures 2 to 4, a series of pockets or recesses 14 are formed in the floor, indicated 12, of the swap body and extend in the transverse direction relative to the swap body, that is to say, perpendicularly to the direction of travel. The pockets 14 preferably have a substantially rectangular cross-section with a depth of at least 90 mm, preferably 140 mm, and with a width such as to house the bases 16 of stands 18 of known type intended to support wooden boxes 20, also of known type, containing the DLF glass panels to be transported, so as to reduce the amount of the projection of the assembly constituted by the stand and the wooden boxes relative to the plane of the floor, to an extent corresponding to the depth of the pockets. In case of pockets of 140 mm depth, the assembly constituted by the stand and the wooden boxes will project from the load platform of the swap by 2710 mm for DLF glass panels of 2550 mm height and 2760 mm for DLF glass panels of 2600 mm height and will therefore be transportable, in both cases, in a C59 swap body the internal height of which is, as stated above, 2760 mm. In case of pockets of 90 mm depth, on the other hand, it will be possible to transport solely DLF glass panels of 2550 mm height (or naturally of smaller format) in a C59 swap body.

Of course, the number of pockets provided depends on the number of stands to be used, that is, on the maximum transportable load. Given the current limits on the maximum load transportable in swap bodies, no more than about a dozen wooden boxes containing DLF glass panels can be transported. Four stands, that is four pockets, are therefore sufficient. Naturally, the pockets are spaced apart in pairs by a distance less than the length of the glass panels to be transported which, for the format in question is 3210 mm.

The presence of the pockets in the floor of the swap body does not prejudice its use for the transport of other goods since the pockets can easily be covered by suitable covering elements so as to obtain a perfectly flat load platform such as that of a conventional swap body. These covering elements can easily be fitted and removed whenever the swap body is to be used for the transport of conventional goods, or of DLF glass panels, respectively.

In conclusion, the fact that the bases of the stands can be housed in pockets formed in the base of the swap body reduces the maximum height of the transportable load and hence, for example, enables even DLF glass panel formats with heights greater than 2400 mm to be transported by C59 swap bodies. The simplicity of the solution proposed enables it to be applied to existing swap bodies with a few easy operations. A swap body adapted for the transport of glass panels in accordance with the invention can nevertheless also be used without problems for the transport of normal goods since the pockets can be closed if necessary by covering elements in order to re-establish the flat load platform of an ordinary swap body. Moreover, the insertion of the bases of the stands into the pockets renders the load more stable during transportation than with the current solution of simply resting the stands on the bases of the swap bodies.

The embodiment and details of construction may be varied widely with respect to those described and illustrated purely by way of non-limiting example, within the scope of the invention of claimed.

## Claims

1. Swap body (10) for the transport of DLF glass panels contained in boxes (20) supported on stands (18) provided with bases (16), the swap body (10) comprising a floor (12),
**characterized in that** the floor (12) has a plurality of pockets or recesses (14) arranged to receive the bases (16) of the stands (18) so as to reduce the amount of the projection of the assembly constituted by the stand (18) and the boxes (20) relative to the floor (12).

2. Swap body according to claim 1, wherein the pockets (14) extend in the transverse direction of the swap body.

3. Swap body according to claim 1 or claim 2, wherein the pockets (14) have a cross-section of substantially rectangular shape.

4. Swap body according to any of the preceding claims, wherein the pockets (14) have a depth equal to at least 90 mm.

5. Swap body according to any of the preceding claims, wherein the pockets (14) have a depth equal to 140 mm.

## Patentansprüche

1. Wechselaufbau (10) für den Transport von DLF-Glasscheiben, die in Boxen (20) enthalten sind, die auf mit Sockeln (16) versehenen Ständern (18) abgestützt sind, wobei der Wechselaufbau (10) einen Boden (12) aufweist,
**dadurch gekennzeichnet, dass** der Boden (12) eine Mehrzahl von Fächern oder Aussparungen (14) aufweist, die angeordnet sind, um die Sockel (16) der Ständer (18) aufzunehmen, um das Vorstehen der Anordnung gebildet aus dem Ständer (18) und den Boxen (20) relativ zu dem Boden (12) zu reduzieren.

2. Wechselaufbau nach Anspruch 1, wobei die Fächer (14) sich in Querrichtung zum Wechselaufbau erstrecken.

3. Wechselaufbau nach Anspruch 1 oder 2, wobei die Fächer (14) einen im Wesentlichen rechtwinkligen Querschnitt aufweisen.

4. Wechselaufbau nach einem der vorstehenden Ansprüche, wobei die Fächer (14) eine Tiefe von mindestens 90 mm aufweisen.

5. Wechselaufbau nach einem der vorstehenden Ansprüche, wobei die Fächer (14) eine Tiefe von 140 mm aufweisen.

## Revendications

1. Caisse mobile (10) pour le transport de panneaux en verre DLF contenus dans des boîtes (20) supportées sur des socles (18) dotés de bases (16), la caisse mobile (10) comprenant un plancher (12),
**caractérisée en ce que** le plancher (12) a une pluralité de poches ou d'évidements (14) agencés pour recevoir les bases (16) des socles (18) afin de réduire la quantité de saillie de l'ensemble constitué par le socle (18) et les boîtes (20) par rapport au plancher (12).

2. Caisse mobile selon la revendication 1, dans laquelle les poches (14) s'étendent dans la direction transversale de la caisse mobile.

3. Caisse mobile selon la revendication 1 ou la revendication 2, dans laquelle les poches (14) ont une section transversale sensiblement de forme rectangulaire.

4. Caisse mobile selon l'une quelconque des revendications précédentes, dans laquelle les poches (14) ont une profondeur égale à au moins 90 mm.

5. Caisse mobile selon l'une quelconque des revendications précédentes, dans laquelle les poches (14) ont une profondeur égale à 140 mm.
